# FASCICULE DE BREVET EUROPEEN

(11) **EP 4 269 220 B1**
(45) Date de publication et mention de la délivrance du brevet: **01.01.2025**
(21) Numéro de dépôt: 23170166.5
(22) Date de dépôt: 26.04.2023
(51) Int. Cl.: B62H 3/12, B62H 3/08

(54) **DISPOSITIF DE PARCAGE POUR CYCLE**
PARKVORRICHTUNG FÜR EINEN FAHRRAD
PARKING DEVICE FOR CYCLE

(30) Priorité: 27.04.2022 FR 2203930
(43) Date de publication de la demande: 01.11.2023
(73) Titulaire: Guenoum, Mikaël, 69380 Lissieu (FR); Cologni, Eric, 13190 Allauch (FR)
(72) Inventeur: Guenoum, Mikaël, 69380 Lissieu (FR); Cologni, Eric, 13190 Allauch (FR)
(74) Mandataire: Cabinet Didier Martin

(56) Documents cités:
- WO-A1-2018/104800
- CN-A- 109 131 646
- CN-A- 112 092 950
- DE-U1- 202021 106 764
- JP-A- 2011 038 396
- JP-A- 2011 162 170

## Description

La présente invention se rapporte au domaine technique général des dispositifs d'aide au stationnement pour les cycles, à pédalage assisté ou non.

La présente invention concerne plus particulièrement un dispositif de parcage pour cycle comprenant :
- un bâti,
- un chariot monté à coulissement relativement au bâti entre une position basse et une position haute de rappel, ledit chariot étant conçu pour embarquer de façon amovible une roue d'un cycle à parquer afin que ladite roue se déplace avec le chariot, ce qui permet d'amener ledit cycle dans une position relevée de parcage, correspondant à la position haute du chariot,
- un verrou porté par le chariot et monté mobile relativement à ce dernier entre une position de verrouillage, dans laquelle ledit verrou engage une conformation d'arrêt solidaire du bâti pour empêcher ledit chariot de rejoindre la position haute à partir de la position basse, et une position de déverrouillage, dans laquelle ledit verrou est dégagé de ladite conformation d'arrêt pour autoriser ledit chariot à rejoindre la position haute à partir de ladite position basse,
- une conformation d'appui, conçue pour entraîner le verrou de sa position de verrouillage à sa position de déverrouillage en réponse à l'exercice, sur ladite conformation d'appui, d'une poussée appliquée par l'intermédiaire de ladite roue selon une première direction de poussée sécante à la direction verticale.

On connaît un dispositif de stationnement pour vélo qui inclut un poteau sur lequel est monté à coulissement vertical un chariot. Le chariot peut ainsi coulisser le long du poteau entre une position basse et une position haute. Ce dispositif connu comprend également un ressort qui rappelle en permanence le chariot en position haute. Le chariot est équipé d'une mâchoire qui comporte deux mors montés à pivotement selon un axe vertical entre d'une part une configuration ouverte et d'autre part une configuration fermée dans laquelle les mors sont rappelés élastiquement.

Le chariot de ce dispositif connu est maintenu en position basse, à l'encontre de la force de rappel exercé par le ressort, par un système de verrouillage. Le chariot comporte également un levier qui interagit d'une part avec la mâchoire et d'autre part avec le système de verrouillage pour que lorsque la roue avant d'un vélo est reçue dans le chariot, ladite roue avant vient faire basculer le levier, ce qui entraîne le déverrouillage du chariot et le rappel élastique des mors en configuration fermée. La roue avant du vélo est ainsi capturée par la mâchoire, qui vient se refermer derrière la jante de la roue, entre les rayons. Le chariot embarque également une pédale qui est pourvue d'un patin souple et est montée à pivotement selon un axe de rotation horizontal entre une première position de rappel élastique dans laquelle le patin vient en appui sur et contre le poteau et une deuxième position dans laquelle le patin est écarté du poteau. Lorsque la roue avant du vélo est engagée dans le chariot, elle vient non seulement faire basculer le levier comme exposé précédemment, mais également presser la pédale en question, de façon à la faire passer de sa première à sa deuxième position et ainsi libérer le déplacement du chariot. Le chariot est alors propulsé vers le haut sous l'effet du rappel élastique exercé par le ressort, entraînant avec lui la roue avant du vélo, tandis que la roue arrière reste au sol. Le vélo passe ainsi automatiquement d'une position horizontale, dans laquelle les deux roues reposent sur le sol, à une position de stationnement vertical, dans laquelle la roue avant est embarquée dans le chariot qui se trouve en position haute, tandis que la roue arrière repose au sol. Ce dispositif de stationnement connu permet ainsi de minimiser l'encombrement au sol du vélo en stationnement, grâce à la position verticale dans laquelle le vélo a été amené et est maintenu.

Ce dispositif de stationnement connu présente toutefois des inconvénients sérieux.

Un inconvénient majeur de ce dispositif connu concerne en premier lieu la sécurité d'utilisation. Rien n'empêche en effet un utilisateur, par exemple un enfant, de venir presser manuellement le levier et/ou la pédale, alors même qu'aucune roue de vélo n'est engagée dans le chariot. Cette manoeuvre intempestive peut entraîner des conséquences catastrophiques, telles que la fermeture brutale de la mâchoire sur la main de l'utilisateur, avec le risque d'occasionner des blessures graves, et/ou le déverrouillage du chariot à vide, entraînant l'ascension brutale de ce dernier, qui peut alors venir percuter violemment l'utilisateur imprudent.

En outre, les mors de la mâchoire peuvent, lorsque cette dernière se referme, entrer en collision avec un ou plusieurs rayons de la roue, avec le risque de détériorer ces derniers et/ou d'entraîner une mauvaise fermeture de la mâchoire.

De plus, la taille prédéterminée de la mâchoire impose de recourir à des tailles de roue spécifiques, et le vélo sera plus ou moins fermement maintenu en fonction de la taille de la roue engagée sur le chariot par rapport à la taille de la mâchoire.

En outre, le système de verrouillage du chariot en position basse comprend une pièce métallique qui fait saillie frontalement du poteau, vers le bas de ce dernier. Cette pièce métallique, du fait de son caractère saillant découlant de la conception retenue, entraîne un risque de blessures pour les personnes qui viendraient s'y cogner et/ou un risque de détérioration d'une roue de vélo qui viendrait la percuter. Cette pièce métallique constitue également, toujours en raison de son caractère saillant, un point de faiblesse puisqu'elle est directement exposée à un éventuel impact avec un objet extérieur (véhicule ou autre) susceptible d'entraîner sa détérioration ou sa rupture.

Enfin, la conception de ce dispositif connu repose sur un mécanisme complexe, et donc potentiellement fragile et sujet à d'éventuelles défaillances de fonctionnement. En particulier, le patin équipant la pédale est susceptible de se détériorer sous l'effet des conditions atmosphériques (pluie, rayonnement UV...). La conception complexe du mécanisme, qui met en oeuvre une multiplicité de pièces mobiles intriquées, conduit également à un encombrement et une masse qui peuvent être considérés par certains comme étant élevés.

Le document CN 109 131 646 A divulgue un dispositif de parcage selon le préambule de la revendication 1.

Les objets assignés à l'invention visent par conséquent à remédier aux différents inconvénients exposés dans ce qui précède et à proposer un nouveau dispositif de parcage pour vélo dont la conception permet d'assurer un très haut degré de sécurité d'utilisation, tout en étant particulièrement robuste, fiable, compact et léger.

Un autre objet de l'invention vise à proposer un nouveau dispositif de parcage pour vélo qui ne nécessite pas de branchement électrique.

Un autre objet de l'invention vise à proposer un nouveau dispositif de parcage pour vélo de construction particulièrement simple, qui met en oeuvre des composants robustes en nombre réduit.

Un autre objet de l'invention vise à proposer un nouveau dispositif de parcage pour vélo dont la construction est économique et se prête particulièrement bien à une fabrication industrielle.

Un autre objet de l'invention vise à proposer un nouveau dispositif de parcage pour vélo facile et rapide à inspecter et à maintenir.

Les objets assignés à l'invention sont atteints à l'aide d'un dispositif de parcage pour cycle comprenant :
- un bâti,
- un chariot monté à coulissement relativement au bâti entre une position basse et une position haute de rappel, ledit chariot étant conçu pour embarquer de façon amovible une roue d'un cycle à parquer afin que ladite roue se déplace avec le chariot, ce qui permet d'amener ledit cycle dans une position relevée de parcage, correspondant à la position haute du chariot,
- un verrou porté par le chariot et monté mobile relativement à ce dernier entre une position de verrouillage, dans laquelle ledit verrou engage une conformation d'arrêt solidaire du bâti pour empêcher ledit chariot de rejoindre la position haute à partir de la position basse, et une position de déverrouillage, dans laquelle ledit verrou est dégagé de ladite conformation d'arrêt pour autoriser ledit chariot à rejoindre la position haute à partir de ladite position basse,
- une conformation d'appui, conçue pour entraîner le verrou de sa position de verrouillage à sa position de déverrouillage en réponse à l'exercice, sur ladite conformation d'appui, d'une poussée appliquée par l'intermédiaire de ladite roue selon une première direction de poussée sécante à la direction verticale,
ledit dispositif de parcage comprenant un support porté par le chariot et sur lequel est destinée à reposer ladite roue embarquée par le chariot, ledit support étant monté mobile relativement au chariot entre une position désactivée entraînant le blocage du verrou pour l'empêcher de gagner sa position de déverrouillage à partir de sa position de verrouillage, et une position activée entraînant la libération du verrou pour l'autoriser à gagner sa position de déverrouillage, ledit support étant conçu pour gagner sa position activée à partir de sa position désactivée sous l'effet d'un effort de poids exercé verticalement par ladite roue sur ledit support lorsque ladite roue repose sur ce dernier, ladite conformation d'appui étant montée mobile entre au moins une position rétractée, dans laquelle elle repousse le verrou en position de déverrouillage et une position déployée, dans laquelle elle est rappelée élastiquement pour pousser sur la roue selon une deuxième direction de poussée opposée à ladite première direction de poussée, ladite conformation d'appui étant montée à pivotement selon un troisième axe de pivotement.

D'autres particularités et avantages de l'invention apparaîtront plus en détails à la lecture de la description détaillée qui suit, en référence aux dessins annexés, donnés à titre d'exemples purement illustratifs et non limitatifs, dans lesquels :
- La Figure 1 illustre, selon une vue schématique en perspective, un dispositif de parcage pour vélo selon l'invention, dont le chariot est en position basse.
- La Figure 2 illustre, selon une vue schématique en perspective du côté gauche, un détail de réalisation du dispositif de parcage de la figure 1, avec des pièces omises pour faciliter la visualisation du mécanisme.
- La Figure 3 est une vue agrandie d'un détail de la figure 2.
- La Figure 4 illustre le détail de réalisation de la figure 2 vu cette fois du côté droit.
- La Figure 5 illustre, selon une vue schématique en perspective de dessous, le chariot du dispositif de parcage des figures 1 à 4.

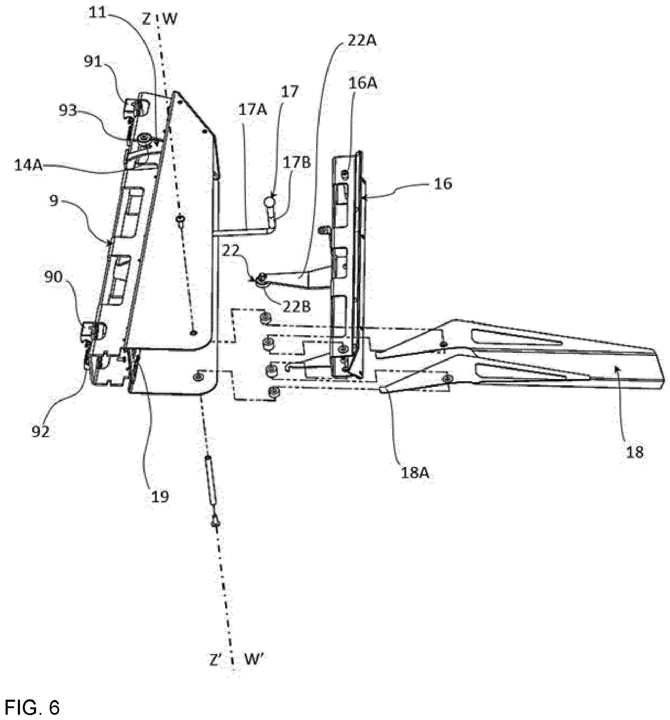

- La Figure 6 est une vue partiellement éclatée du chariot de la figure 5, permettant de visualiser le montage sur le chariot de la conformation d'appui et du support.

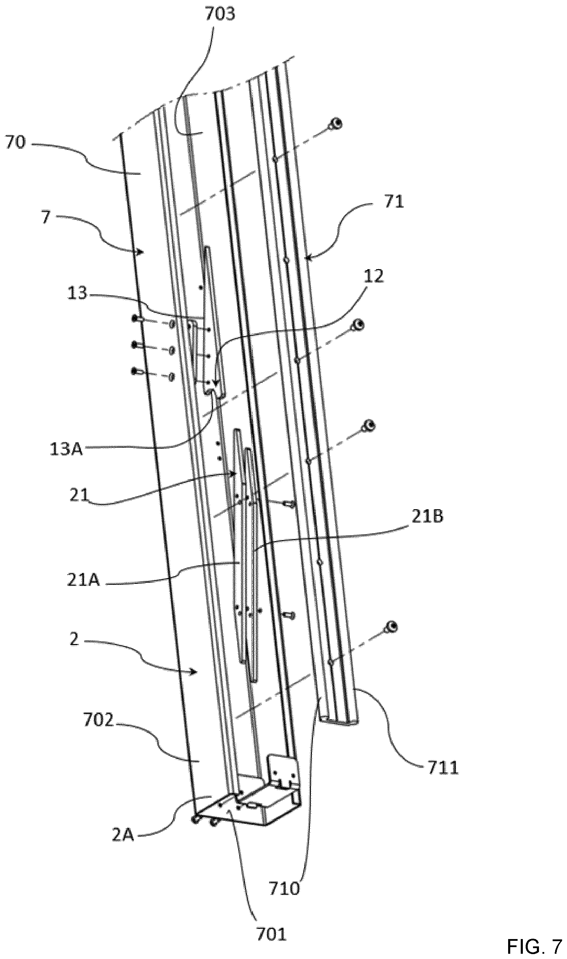

- La Figure 7 illustre, selon une vue éclatée, un détail de réalisation du bâti du dispositif de parcage des figures 1 à 4.
- La Figure 8 illustre, selon une vue schématique en perspective, un détail de réalisation du dispositif de parcage des figures précédentes, dont le chariot est en position basse avec un effort de poids exercé sur le support par une roue avant (non illustrée) de vélo reposant sur ledit support.
- La Figure 9 illustre, selon une vue schématique en perspective du côté gauche, un détail de réalisation du dispositif de parcage des figures précédentes, dont le chariot est en position basse, le support étant soumis à un effort de poids exercé par une roue avant (non illustrée) de vélo reposant sur ledit support, tandis qu'une poussée est appliquée par l'intermédiaire de ladite roue sur la conformation d'appui pour libérer le chariot.
- La Figure 10 est analogue à la figure 9 mais vue cette fois du côté droit.
- La Figure 11 illustre, selon une vue schématique en perspective du côté gauche, un détail de réalisation du dispositif de parcage des figures précédentes, dont le chariot se trouve dans une position intermédiaire entre ses positions basse et haute, une roue avant d'un cycle (non illustrée) étant embarquée par le chariot, ladite roue reposant sur le support du chariot et étant pressée localement entre la conformation d'appui rappelée élastiquement et l'organe d'accrochage.
- La Figure 12 est analogue à la figure 11 mais vue cette fois du côté droit.
- La Figure 13 illustre, selon une vue schématique en perspective, le dispositif de parcage des figures précédentes dont le chariot est cette fois en position haute.

L'invention concerne un dispositif de parcage 1 pour cycle. Le terme « cycle » désigne ici classiquement un véhicule comprenant au moins deux roues, qui est propulsé à l'aide de l'énergie musculaire d'une ou plusieurs personnes embarquées sur le cycle, avec ou sans assistance motorisée. Le dispositif de parcage 1 peut donc être utilisé pour le stationnement d'une bicyclette (vélo), d'un tricycle ou encore d'un quadricycle. De préférence, le dispositif de parcage 1 est un dispositif de parcage pour vélo (bicyclette), à pédalage assisté (« *vélo électrique* ») ou non (« *vélo musculaire* »). Le dispositif de parcage 1 est donc conçu pour interagir avec un cycle à parquer, afin de maintenir ce dernier dans une position de stationnement prédéterminée.

À cette fin, le dispositif de parcage 1 comprend un bâti 2, qui forme une structure de support conçue pour être disposée de façon fixe par rapport au sol, c'est-à-dire être immobilisée relativement au sol. Pour cela, le bâti 2 comprend par exemple des pattes de fixation 3, 4, 5 munies d'un orifice respectif permettant la fixation du bâti 2 à une paroi verticale, par exemple une cloison d'une pièce ou un mur d'un bâtiment. Le bâti 2 s'étend avantageusement entre une extrémité basse 2A destinée à être disposée au niveau du sol et une extrémité haute 2B opposée libre. Par exemple, le bâti 2 comprend un poteau 7 rectiligne destiné à s'étendre longitudinalement selon une direction verticale X-X', perpendiculairement au sol sur lequel il repose. Le poteau 7 est avantageusement constitué d'éléments métalliques, afin de présenter une tenue mécanique propre et une rigidité appropriée. Par exemple, le poteau 7 comprend un profilé 70 en U, qui présente un fond 701 de chaque côté duquel s'étendent deux joues 702, 703 parallèles. Avantageusement le bâti 2 comprend également un socle 8 qui est par exemple fixé au poteau 7 et s'étend de préférence sensiblement perpendiculairement à ce dernier, afin de former une embase pour le poteau 7. Le socle 8 présente avantageusement une forme de gouttière pour délimiter un chemin d'accès destiné à être emprunté par une roue (de préférence une roue avant) d'un cycle à parquer.

De préférence, le bâti 2 est également pourvu d'un dispositif de sécurisation 6, qui se présente par exemple sous la forme d'un arceau fixé au poteau 7, avantageusement vers le bas de ce dernier. Ledit arceau sert ainsi de point d'attache pour un dispositif antivol (souple ou rigide) amovible qui relie un élément du vélo à parquer (une roue par exemple) audit arceau.

Avantageusement, le dispositif de parcage 1 comprend également un chariot 9 monté à coulissement relativement au bâti 2. En d'autres termes, le chariot 9 forme un équipage mobile relié au bâti 2 par une liaison glissière, de sorte que le chariot 9 est conçu pour se déplacer à translation, selon la direction verticale X-X', relativement au bâti 2 auquel il est attaché. La liaison glissière entre le chariot 9 et le bâti 2 est avantageusement assurée par la coopération de premiers et deuxièmes moyens de guidage complémentaires respectivement portés par le chariot 9 et le bâti 2. Par exemple, les premiers moyens de guidage comprennent des coulisseaux 90, 91, 92, 93 qui présentent de préférence une surface de glissement concave, tandis que lesdits deuxièmes moyens de guidage comprennent de préférence des rails 710, 711 définissant par exemple une surface de glissement convexe conjuguée à ladite surface de glissement concave.

Les rails 710, 711 sont par exemple formés par une pièce unitaire 71 qui est rapporté sur et contre le fond 701, et fixée à ce dernier, à l'intérieur dudit profilé 70 en U. Chaque rail 710, 711 est par exemple formé par une tringle dont la section transversale présente au moins une portion circulaire. Chaque coulisseau 90, 91, 92, 93 est enfilé sur l'une des tringles formant les rails 710, 711 pour glisser le long de ladite tringle tout en étant attaché à la tringle en question, du fait de la coopération de forme entre chaque coulisseau 90, 91, 92, 93 et la tringle concernée. Les coulisseaux forment ainsi avantageusement des patins de guidage conçus pour glisser le long du rail 710, 711 sur lequel ils sont montés. Il est cependant envisageable de recourir à des moyens alternatifs de guidage, comme par exemple des galets portés par le chariot 9 et conçus pour rouler le long de surfaces de roulement conjuguées portées par le bâti 2.

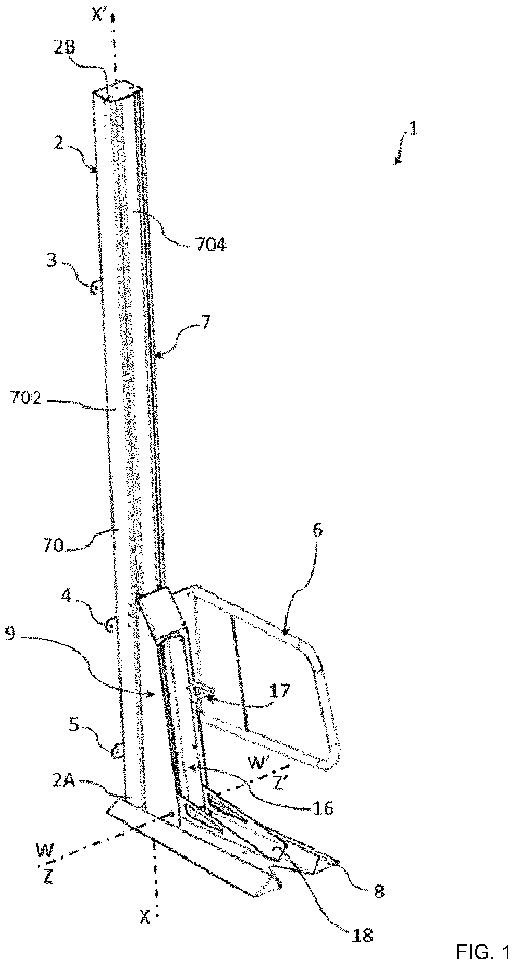

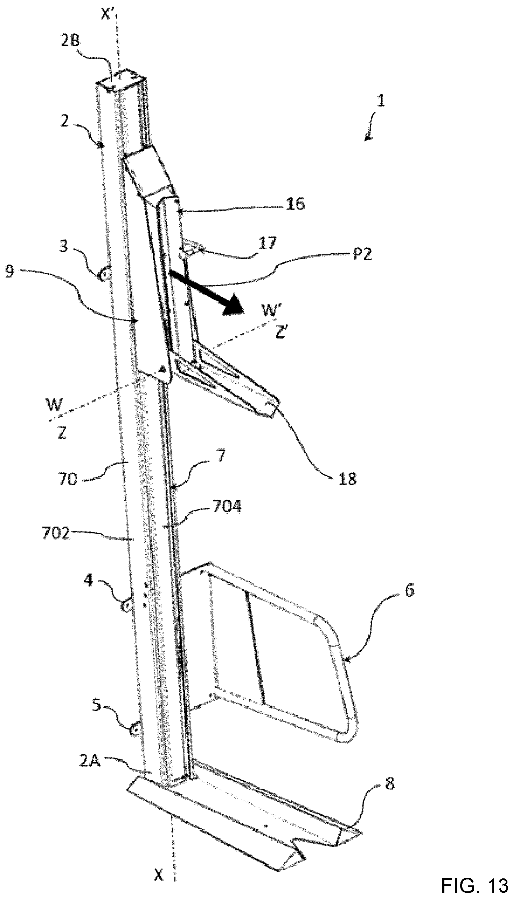

Plus précisément, le chariot 9 est monté à coulissement relativement au bâti 2 entre une position basse (illustrée notamment à la figure 1) et une position haute (illustrée par la figure 13). La position haute est une position de rappel, c'est-à-dire que le chariot 9 est soumis en permanence à une contrainte mécanique qui tend à l'amener ou à le ramener en position haute.

Grâce à ce rappel permanent, qui est de préférence un rappel élastique, le chariot 9 peut automatiquement rejoindre sa position haute, sans que l'utilisateur n'ait pour cela besoin d'exercer un quelconque effort musculaire.

De préférence, le dispositif de parcage 1 comprend un premier organe de rappel élastique 10 qui relie lesdits bâti 2 et chariot 9 pour rappeler élastiquement ledit chariot 9 en position haute. Ledit premier organe de rappel élastique 10 est avantageusement logé au sein du poteau 7, c'est-à-dire en l'espèce entre les joues 702, 703. De préférence, le poteau 7 comprend un capot de fermeture 704 qui ferme le profilé en U, afin de masquer ledit premier organe de rappel élastique 10. Par exemple, ledit premier organe de rappel élastique 10 comprend un ressort, et par exemple un ressort de traction, qui s'étend entre une extrémité supérieure attachée à l'extrémité haute du bâti 2, et une extrémité inférieure attachée au chariot 9. Il est cependant parfaitement envisageable que ledit premier organe de rappel élastique 10 comprenne un autre moyen élastique, qui n'est pas un ressort de traction.

Alternativement, il est également envisageable que le dispositif de parcage 1 comprenne, à la place du premier organe de rappel élastique 10, un autre moyen de rappel, qui peut mettre par exemple en oeuvre un système de poulies, câbles et contrepoids, ou encore un système magnétique, voire même un système motorisé. Le recours à un organe de rappel élastique est toutefois préféré, en raison de sa simplicité (pas besoin de branchement électrique), de sa fiabilité, de sa robustesse et de son coût réduit.

Conformément à l'invention, le chariot 9 est conçu pour embarquer de façon amovible une roue R d'un cycle à parquer (par exemple une roue R d'un vélo), afin que ladite roue R se déplace avec le chariot 9, ce qui permet d'amener ledit cycle dans une position relevée de parcage, correspondant à la position haute du chariot 9.

Par exemple, la roue R comprend une jante R0 sur et à l'extérieur de laquelle est monté un pneu R1. La roue R comprend également par exemple un moyeu ainsi que des rayons qui assurent la liaison mécanique entre le moyeu et la jante R0. De préférence, ledit chariot 9 est conçu pour embarquer une roue avant du cycle à parquer, et de préférence la roue avant d'un vélo, qui pivote avec le guidon de ce dernier. Plus précisément, le chariot 9 est préférentiellement conçu pour embarquer une seule roue d'un cycle, et par exemple une roue avant R dont la taille est comprise entre 12" et 29".

La roue avant R du vélo à parquer est ainsi avantageusement embarquée sur le chariot 9, alors que ce dernier est en position basse, de sorte que le chariot 9, lorsqu'il va coulisser le long du bâti 2 pour rejoindre sa position haute, va entraîner avec lui ladite roue R, amenant ainsi le cycle dans une position relevée de parcage, dans laquelle la roue avant est disposée au-dessus de la roue arrière du cycle, laquelle repose sur le sol.

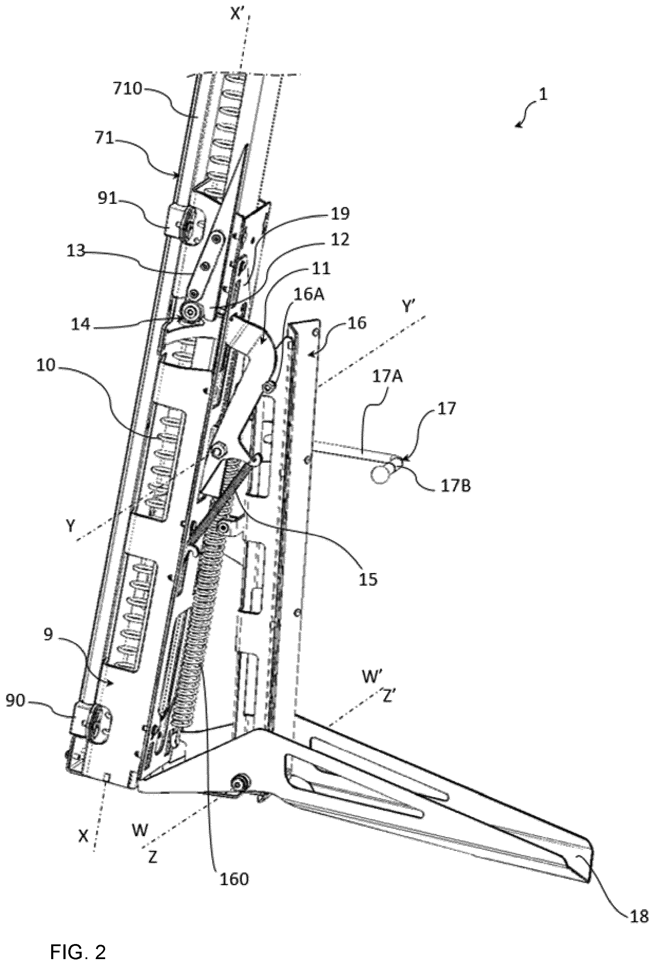

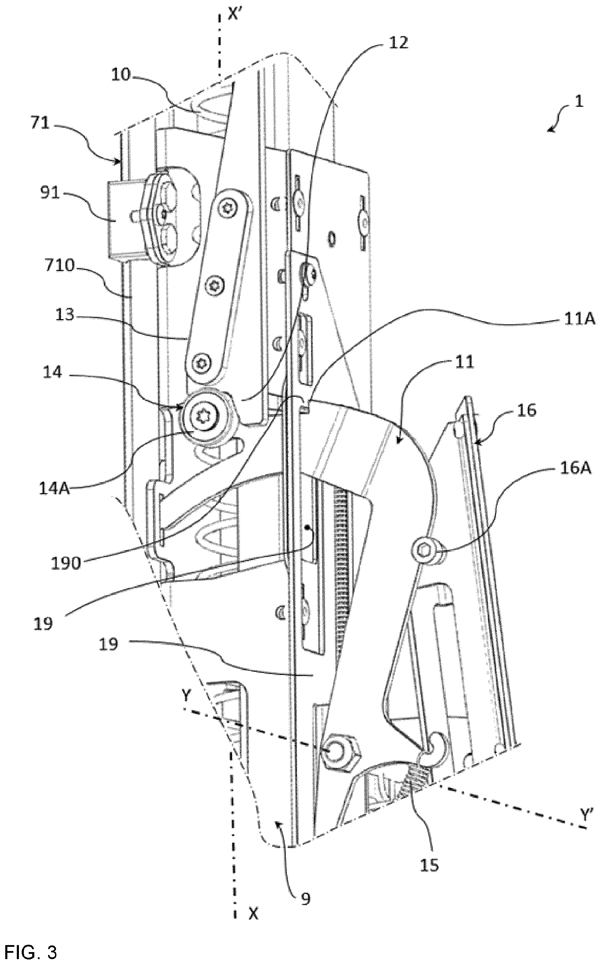

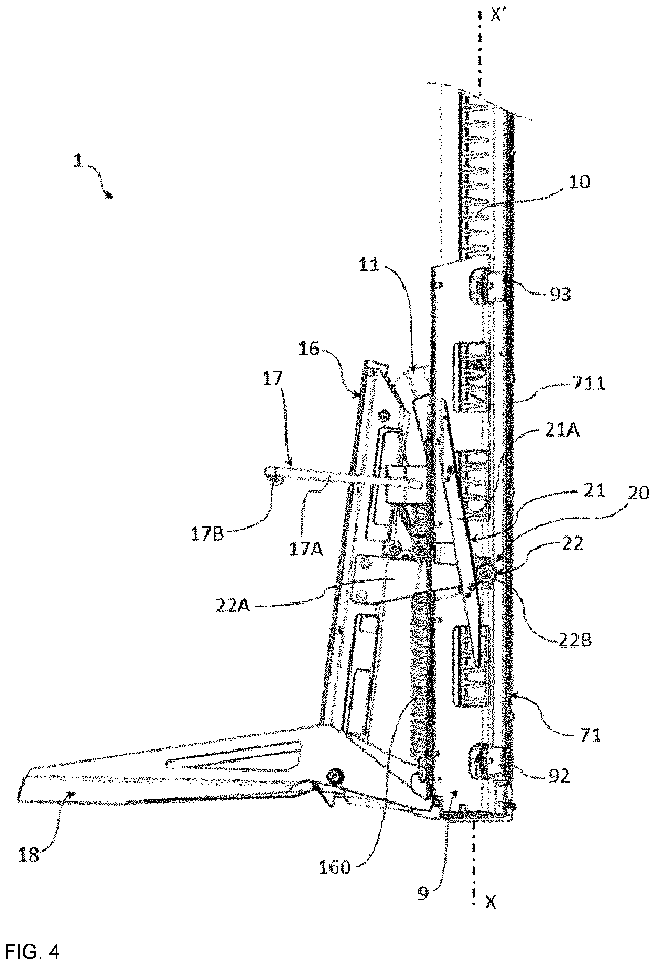

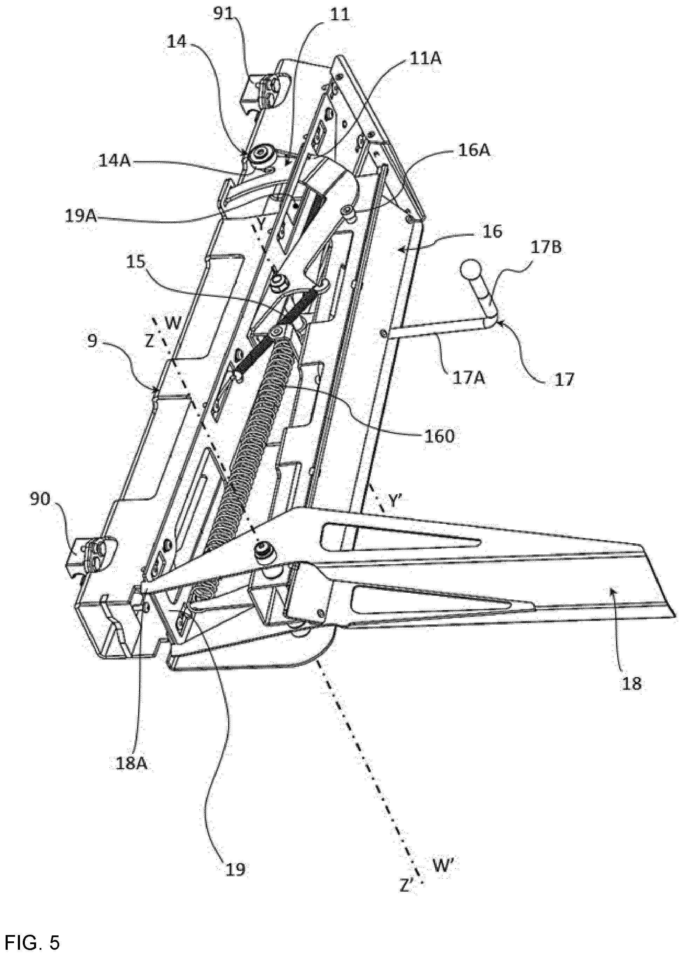

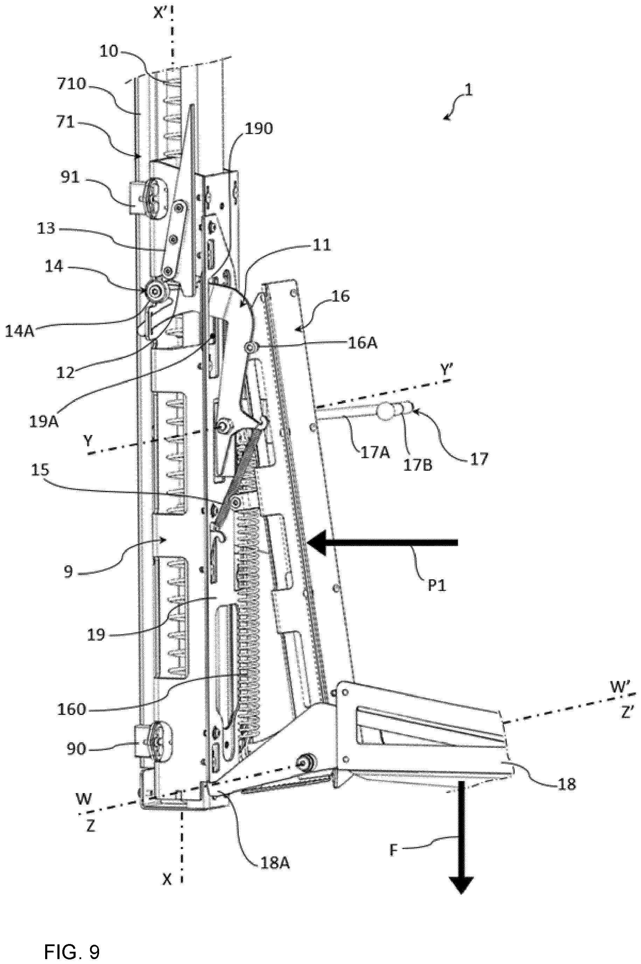

Conformément à l'invention, le dispositif de parcage 1 comprend un verrou 11 porté par le chariot 9 et monté mobile relativement à ce dernier entre une position de verrouillage (illustrée aux figures 1 à 5 et 8) et une position de déverrouillage (illustrée aux figures 9 à 13). Le dispositif de parcage 1 comprend également une conformation d'arrêt 12 solidaire du bâti 2, c'est-à-dire fixée au bâti 2 pour être immobilisé par rapport à ce dernier. Dans la position de verrouillage, ledit verrou 11 engage ladite conformation d'arrêt 12 pour empêcher le chariot 9 de rejoindre sa position haute à partir de sa position basse, tandis que dans la position de déverrouillage, le verrou 11 est dégagé de ladite conformation d'arrêt 12 pour autoriser le chariot 9 à rejoindre sa position haute à partir de sa position basse.

En d'autres termes, le verrou 11 est embarqué par le chariot 9, c'est-à-dire qu'il se déplace avec ce dernier par rapport au bâti 2, tout en étant mobile par rapport au chariot 9 entre ses positions de verrouillage et de déverrouillage. La conformation d'arrêt 12 est quant à elle fixée au bâti 2, c'est-à-dire immobilisée par rapport à ce dernier. Ainsi, lorsque le chariot 9 est en position basse et que le verrou 11 est en position de verrouillage, ledit verrou 11 coopère avec la conformation d'arrêt 12, par exemple en prenant appui sur et contre cette dernière, pour bloquer le déplacement du chariot 9 qui est ainsi empêché de quitter sa position basse.

À l'inverse, lorsque le verrou 11 passe en position de déverrouillage alors que le chariot 9 est en position basse, le verrou 11 s'écarte de la conformation d'arrêt 12 (figure 9), de préférence de manière être hors de contact de cette dernière, libérant ainsi le déplacement du chariot 9. Ce dernier peut alors, sous l'effet de l'effort de rappel exercé par le premier organe de rappel élastique 10, rejoindre spontanément et automatiquement sa position haute de rappel.

Avantageusement, le verrou 11 est monté à pivotement selon un premier axe de pivotement Y-Y' relativement audit chariot 9, de sorte que le verrou 11 effectue une rotation, selon ledit premier axe de pivotement Y-Y', pour passer de la position de verrouillage à la position de déverrouillage et réciproquement. De préférence, le premier axe de pivotement Y-Y' s'étend à l'horizontale, perpendiculairement à la direction verticale X-X'. Le verrou 11 comprend par exemple un premier levier, qui présente de préférence une forme globalement en L, tandis que la conformation d'arrêt 12 comprend quant à elle une surface de butée destinée à venir interférer au moins localement avec le premier levier formant avantageusement le verrou 11 lorsque ce dernier est en position de verrouillage, pour contraindre le chariot 9 à rester en position basse en dépit de la force de rappel élastique exercée par le premier organe de rappel élastique 10 sur le chariot 9.

Bien entendu, il est parfaitement envisageable, selon un mode de réalisation alternatif non illustré, de recourir à un verrou 11 qui n'est pas monté à rotation, mais est par exemple monté mobile à translation, sans pour autant que l'on sorte du cadre de l'invention. Le recours à un montage en rotation s'avère toutefois particulièrement avantageux car il permet une conception particulièrement compacte et fiable.

Avantageusement, le dispositif de parcage 1 comprend au moins un premier chemin de guidage 13 porté par le bâti 2. Le premier chemin guidage 13 est par exemple formé par un chant d'une pièce en forme de plaque fixée sur la face intérieure de l'une des joues 702, 703, parallèlement à cette dernière. Le verrou 11 comprend quant à lui avantageusement un premier élément de guidage 14 qui engage ledit premier chemin de guidage 13 pour se déplacer le long de ce dernier sous l'effet du déplacement du chariot 9 le long du bâti 2. Le premier élément de guidage 14 comprend par exemple un premier galet 14A conçu pour rouler le long du premier chemin de guidage 13. Ledit premier galet 14A est par exemple monté vers une extrémité du premier levier formant avantageusement le verrou 11. Le premier galet 14A est avantageusement monté à rotation libre relativement audit premier levier, selon un axe de pivotement qui est avantageusement horizontal, c'est-à-dire qui s'étend selon une direction perpendiculaire à la direction verticale X-X', parallèlement audit premier axe de rotation Y-Y'.

Le premier chemin de guidage 13 comprend avantageusement une portion de capture 13A conçue pour capturer le premier élément de guidage 14 (et par exemple le premier galet 14A) lorsque le chariot 9 atteint sa position basse. Dans ce mode de réalisation préférentiel, ladite portion de capture 13A forme ainsi la conformation d'arrêt 12. Dans le mode de réalisation préférentiel illustré aux figures, la portion de capture 13A est formée par un ressaut du premier chemin de guidage 13, c'est-à-dire par une discontinuité géométrique qui localement forme une marche délimitant une surface de butée contre laquelle le premier galet 14A vient en butée selon la direction verticale X-X', sous l'effet de la force de rappel exercée par le premier organe de rappel élastique 10.

Avantageusement, ladite position de verrouillage du verrou 11 est une position de rappel, c'est-à-dire que le verrou 11 est soumis en permanence à un effort qui tend à le ramener en position de verrouillage. À cette fin, le dispositif de parcage 1 comprend avantageusement un deuxième organe de rappel élastique 15, qui inclut par exemple un ressort de traction, ledit deuxième organe de rappel élastique 15 reliant le verrou 11 au chariot 9 afin de rappeler élastiquement le verrou 11 en position de verrouillage, comme illustré aux figures. Grâce à cette caractéristique, le premier élément de guidage 14 reste avantageusement capturé par la portion de capture 13A tant qu'un effort permettant de faire basculer le verrou 11 hors de sa position de verrouillage, à l'encontre de la force de rappel exercée par le deuxième organe de rappel élastique 15, n'est pas exercé sur le verrou 11.

Comme illustré, le dispositif de parcage 1 comprend par ailleurs une conformation d'appui 16 conçue pour entraîner le verrou 11 de sa position de verrouillage à sa position de déverrouillage, en réponse à l'exercice, sur ladite conformation d'appui 16, d'une poussée appliquée par l'intermédiaire de ladite roue R selon une première direction de poussée P1 sécante à la direction verticale X-X'. La conformation d'appui 16 joue ainsi avantageusement au moins le rôle d'une interface de commande du verrou 11, permettant d'impartir au verrou 11 un déplacement (par exemple une rotation dans le mode de réalisation illustrée aux figures) de sa position de verrouillage à sa position de déverrouillage lorsqu'un effort prédéterminé, correspondant à une poussée appliquée en direction du verrou 11, selon la première direction de poussée P1, est exercé sur la conformation d'appui 16 par l'utilisateur, par l'intermédiaire de la roue R embarquée par le chariot 9.

Ainsi, l'utilisateur peut par exemple pousser la roue avant R de son vélo sur et contre la conformation d'appui 16, laquelle va en réponse se déplacer, en entraînant avec elle le déplacement du verrou 11 pour lui faire quitter sa position de verrouillage et l'amener dans sa position de déverrouillage.

La conformation d'appui 16 peut être directement portée par le verrou 11, avec lequel elle ne forme dans ce cas-là qu'une seule et même pièce d'un seul tenant, sans faculté de mobilité relative entre le verrou 11 et la conformation d'appui 16. Toutefois, selon un mode de réalisation préférentiel, qui correspond à celui illustré aux figures, la conformation d'appui 16 n'est pas portée par le verrou 11 et est formée par une pièce indépendante de ce dernier, qui se déplace indépendamment du verrou 11, ce qui lui permet d'assurer plusieurs fonctions comme cela sera exposé plus en détail dans ce qui suit.

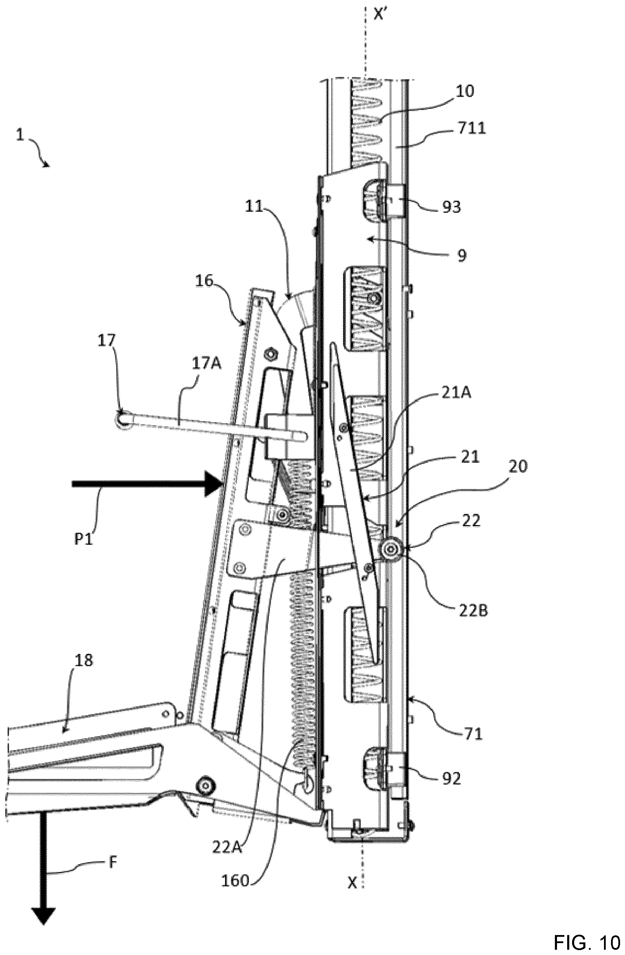

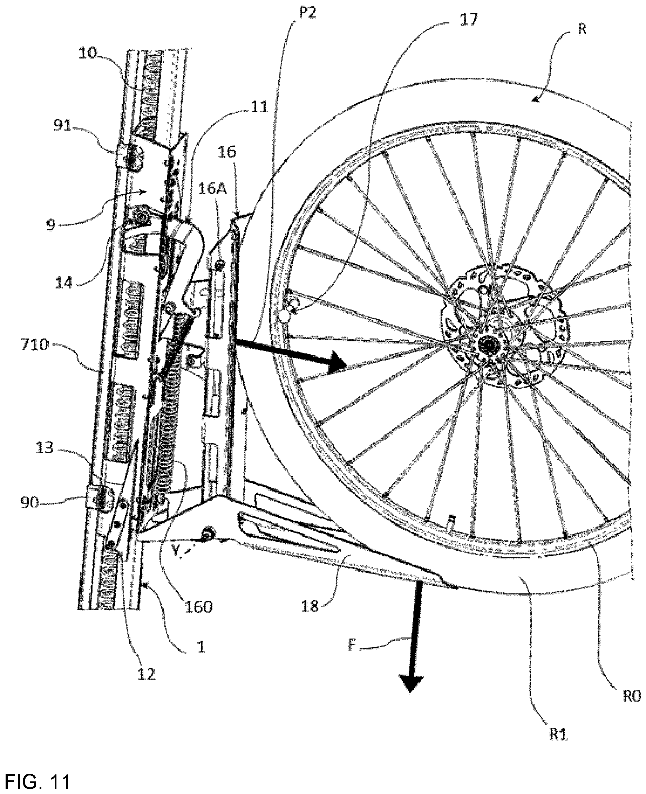

La conformation d'appui 16 comprend par exemple un pion 16A qui est destiné à venir en appui contre le verrou 11 pour communiquer à ce dernier la poussée exercée selon la première direction de poussée P1 sur la conformation d'appui 16, via la roue R. Le pion 16A est ainsi conçu pour venir au contact du verrou 11 afin de repousser ce dernier hors de sa position de verrouillage. Avantageusement, ladite conformation d'appui 16 est montée mobile entre au moins une position rétractée (illustrée aux figures 9 et 10), dans laquelle elle repousse le verrou 11 en position de déverrouillage et une position déployée (figures 11 à 13) dans laquelle la conformation d'appui 16 est rappelée élastiquement pour pousser sur la roue R selon une deuxième direction de poussée P2 opposée à ladite première direction de poussée P1.

En d'autres termes, la conformation d'appui 16 est conçue pour presser le verrou 11 lorsqu'elle atteint sa position rétractée, afin de déplacer ce dernier, à l'encontre de la force de rappel exercée par le deuxième organe de rappel élastique 15, et l'amener jusque dans ladite position de déverrouillage permettant le mouvement ascendant du chariot 9 sous l'effet du rappel élastique exercé par le premier organe de rappel élastique 10. À l'inverse, dans sa position déployée, la conformation d'appui 16 ne contraint pas le verrou 11, et est même avantageusement écartée de ce dernier, pour venir presser élastiquement la roue R selon la direction de poussée P2.

Avantageusement, ledit dispositif de parcage 1 comprend un troisième organe de rappel élastique 160 qui exerce en permanence, sur la conformation d'appui 16, un effort de rappel tendant à ramener ou maintenir ladite conformation d'appui 16 en position déployée. Par exemple, le troisième organe de rappel élastique 160 comprend un ressort de traction, qui relie le chariot 9 à la conformation d'appui 16 pour rappeler élastiquement cette dernière en position déployée.

Avantageusement, la conformation d'appui 16 est montée à pivotement selon un troisième axe de pivotement Z-Z', qui est de préférence parallèle audit premier axe de pivotement Y-Y'. De préférence, le troisième axe de pivotement Z-Z' s'étend sensiblement horizontalement, c'est-à-dire perpendiculairement à la direction verticale X-X'. Par exemple, la conformation d'appui 16 comprend un deuxième levier capable de basculer entre deux positions extrêmes correspondant respectivement auxdites positions rétractée et déployée.

Avantageusement, la conformation d'appui 16 présente une portion concave destinée à venir au contact de la roue R, ce qui permet d'assurer un contact surfacique entre la roue R et la conformation d'appui 16, favorisant le maintien en position de la roue R par rapport au chariot 9. De préférence, la conformation concave se présente sous la forme d'une gouttière présentant sensiblement un profil en V, ce qui permet de s'adapter à différentes tailles de roue R (et plus précisément différentes tailles de pneu R1, et notamment de largeur de pneu R1).

Dans ce mode de réalisation particulièrement avantageux, la conformation d'appui 16 comprend ainsi un deuxième levier en forme de gouttière qui peut basculer entre :
- la position rétractée dans laquelle il vient presser le verrou 11 pour le forcer à quitter sa position de verrouillage dans laquelle il est rappelé élastiquement
- et la position déployée dans laquelle il est rappelé élastiquement pour venir presser la roue R contre l'organe d'accrochage 17.

Avantageusement, le chariot 9 est pourvu d'un organe d'accrochage 17 de ladite roue R, qui est conçue pour venir s'insérer entre des rayons de ladite roue R lorsque cette dernière est embarquée par le chariot 9, pour que ladite roue R soit interposée entre l'organe d'accrochage 17 et la conformation d'appui 16. L'organe d'accrochage 17 est avantageusement attaché de façon fixe au chariot 9, c'est-à-dire qu'il est embarqué par ce dernier et se déplace avec lui, sans pour autant présenter une faculté de mobilité par rapport au chariot 9. Par exemple, l'organe d'accrochage 17 comprend un crochet formé par un premier bras 17A, qui s'étend au droit du chariot 9, de préférence dans un plan parallèle à la direction verticale X-X' et avantageusement perpendiculaire au troisième axe de pivotement Z-Z', ainsi que par un deuxième bras 17B qui prolonge le premier bras 17A en s'étendant sensiblement perpendiculairement à ce dernier, ledit deuxième bras 17B se terminant par une extrémité libre. Le crochet 17A, 17B affecte ainsi avantageusement une forme en L, comme illustré aux figures. L'utilisateur peut placer la roue R sur le chariot 9, de façon à insérer le deuxième bras 17B entre les rayons de la roue R, avec la jante R0 et le pneu R1 de la roue R interposés localement entre le deuxième bras 17B et la conformation d'appui 16. Le rappel élastique de la conformation d'appui 16 en position déployée conduit cette dernière à venir en appui sur et contre la roue R, pour presser cette dernière selon la deuxième direction de poussée P2, de sorte que la roue R est pressée localement entre d'une part la conformation d'appui 16 qui appuie sur le pneu R1 de la roue R, et d'autre part l'organe d'accrochage 17 contre lequel vient appuyer l'intérieur de la jante R0 de la roue R.

La conformation d'appui 16 joue donc un double rôle, savoir :
- un rôle de commande du passage du verrou 11 de sa position de verrouillage à sa position de déverrouillage ;
- un rôle de maintien de la roue R embarquée par le chariot 9, par pressage élastique de la roue R contre l'organe d'accrochage 17.

Comme illustré aux figures, le dispositif de parcage 1 comprend par ailleurs un support 18 porté par le chariot 9, c'est-à-dire embarqué par le chariot 9 pour se déplacer avec ce dernier, et sur lequel est destiné à reposer ladite roue R embarquée par le chariot 9. Le support 18 est donc conçu pour accueillir sur lui la roue R, de sorte que lorsque la roue R est embarquée par le chariot 9, le support 18 se trouve sous la roue R.

Afin de favoriser un support stable et sûr de la roue R, le support 18 présente avantageusement une forme de gouttière, avec des parois latérales qui s'étendent chacune sensiblement verticalement, et qui sont reliées par un fond présentant avantageusement un profil en V pour s'adapter à différentes tailles de roue R, à l'instar de la gouttière portée avantageusement par la conformation d'appui 16 comme décrit précédemment.

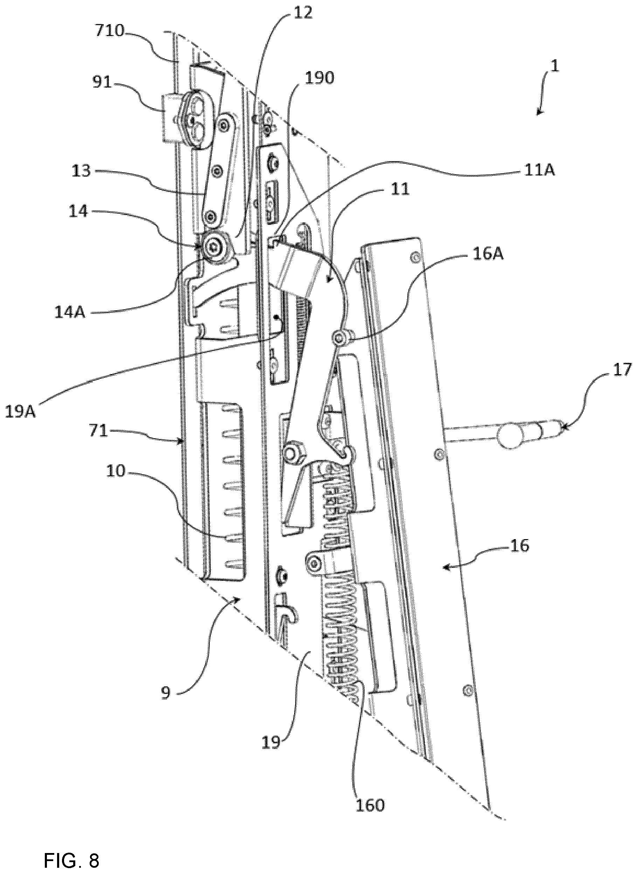

Le support 18 est monté mobile relativement au chariot 9 entre une position désactivée (illustrée par les figures 1 à 5) entraînant le blocage du verrou 11 pour l'empêcher de gagner sa position de déverrouillage à partir de sa position de verrouillage, et une position activée (figures 8 à 13) entraînant la libération du verrou 11 pour l'autoriser à gagner sa position de déverrouillage. En d'autres termes, le support 18 assume une double fonction, savoir :
- une première fonction de réception et de support de la roue R,
- et une deuxième fonction de contrôle du déplacement du verrou 11, afin d'empêcher le verrou 11 de gagner sa position de déverrouillage, en empêchant par exemple la conformation d'appui 16 d'entraîner le verrou 11 jusque dans sa position de déverrouillage.

Le support 18 est plus précisément conçu pour gagner sa position activée à partir de sa position désactivée sous l'effet d'un effort de poids F exercé verticalement par ladite roue R sur ledit support 18, lorsque ladite roue R repose sur ce dernier. Cela signifie que le support 18 est attaché au chariot 9 par une liaison mécanique qui autorise un déplacement du support 18 par rapport au chariot 9 lorsque le support 18 est soumis à un effort vertical, du haut vers le bas, correspondant à l'effort de poids F exercé par la roue R lorsque cette dernière est embarquée par le chariot 9.

Avantageusement, la position désactivée est une position de rappel, c'est-à-dire que le support 18 est soumis en permanence à un effort de rappel qui tend à le ramener et/ou à le maintenir dans sa position désactivée, en l'absence de l'effort de poids F exercé verticalement par la roue R du vélo à parquer.

Lorsque la roue R est chargée sur le support 18, ce dernier subit en retour un déplacement (en l'occurrence vers le bas) qui l'amène à quitter sa position désactivée pour gagner sa position activée, dans laquelle le verrou 11 est autorisé à quitter sa position de verrouillage pour gagner sa position de déverrouillage, sous l'effet d'une poussée exercée sur la conformation d'appui 16, selon ladite première direction de poussée P1 (qui correspond avantageusement et sensiblement à la direction horizontale).

Grâce à cette caractéristique, le dispositif de parcage 1 présente un niveau de sécurité élevé. En effet, en l'absence de l'effort de poids F exercé verticalement sur le support 18, qui traduit l'absence de la roue R sur le support 18, le verrou 11 est empêché de gagner la position de déverrouillage qui autorise le déplacement du chariot 9 de sa position basse vers sa position haute, même si une poussée est appliquée sur la conformation d'appui 16 selon la première direction de poussée P1. De plus, en l'absence de poussée appliquée sur la conformation d'appui 16 selon la première direction de poussée P1, le verrou 11 ne quitte pas sa position de verrouillage pour rejoindre sa position de déverrouillage, même si la roue R repose sur le support 18 qui se trouve alors en position activée.

En d'autres termes, le chariot 9 ne pourra quitter sa position basse pour rejoindre sa position haute de rappel que si à la fois :
- le support 18 est maintenu en position activée par la roue R embarquée par le chariot 9, et
- alors que le support 18 est en position activée, une poussée est appliquée, de préférence par l'intermédiaire de la roue R, selon la première direction de poussée P1, sur la conformation d'appui 16, pour entraîner ainsi, par l'intermédiaire du pion 16A, le déplacement du verrou 11 de sa position de verrouillage à sa position de déverrouillage.

Avantageusement, le support 18 est monté à pivotement par rapport audit chariot 9, selon un deuxième axe W-W' de pivotement, qui est de préférence un axe horizontal. Le dispositif de parcage 1 comprend par exemple un troisième levier monté à rotation selon le deuxième axe de pivotement W-W'.

Une portion avant dudit troisième levier, située d'un côté du deuxième axe de pivotement W-W', forme avantageusement ledit support 18, tandis qu'une portion arrière dudit troisième levier, située de l'autre côté du deuxième axe de pivotement W-W', forme un élément d'actionnement 18A dont la fonction sera décrite plus loin. Avantageusement, lesdits deuxième axe de pivotement W-W' et troisième axe de pivotement Z-Z' de pivotement sont confondus, c'est-à-dire que la conformation d'appui 16 et le support 18 pivotent selon un seul et même unique axe de pivotement Z-Z', W-W'. Grâce à cette caractéristique, le dispositif de parcage 1 présente un caractère particulièrement compact, avec un nombre de pièces minimisée et une robustesse élevée.

Avantageusement, le dispositif de parcage 1 comprend un organe de blocage 19 porté par le chariot 9, c'est-à-dire embarqué par ce dernier pour se déplacer avec le chariot 9. L'organe de blocage 19 est préférentiellement monté mobile relativement au chariot 9, entre :
- une position de blocage (figures 1 à 5) dans laquelle organe de blocage 19 fait obstacle au déplacement du verrou 11, de façon à empêcher ce dernier de gagner sa position de déverrouillage à partir de sa position de verrouillage lorsque le chariot 9 est en position basse, et
- une position de déblocage (figure 8) dans laquelle l'organe de blocage 19 libère le déplacement du verrou 11, de façon à autoriser ce dernier à quitter sa position de verrouillage pour rejoindre sa position de déverrouillage.

Avantageusement, l'organe de blocage 19 est relié au support 18 pour que le déplacement dudit support 18 de la position désactivée à la position activée entraîne le déplacement de l'organe de blocage 19 de la position de blocage à la position de déblocage. Réciproquement, le déplacement du support 18 de la position activée à la position désactivée conduit avantageusement au déplacement de l'organe de blocage 19 de la position de déblocage à la position de blocage. En d'autres termes, le support 18 commande, en fonction de sa position, la position de l'organe de blocage 19 par rapport au chariot 9.

Il est ainsi impossible pour l'organe de blocage 19 de libérer le déplacement du verrou 11 tant que le support 18 n'a pas gagné, sous l'effet de l'effort de poids F exercé verticalement par la roue R, sa position activée.

Avantageusement, l'organe de blocage 19 est monté à coulissement relativement au chariot 9, de préférence selon une direction de coulissement qui est sensiblement parallèle à la direction verticale X-X'. En d'autres termes, dans ce mode de réalisation préférentiel, l'organe de blocage 19 est conçu pour se déplacer en translation, parallèlement à la direction verticale X-X', le long du chariot 9. De préférence, l'organe de blocage 19 est monté à coulissement libre relativement au chariot 9, entre une position inférieure, correspondant à la position de blocage, et une position supérieure, correspondant à la position de déblocage.

Avantageusement, la position inférieure de l'organe de blocage 19 est une position de rappel, c'est-à-dire que l'organe de blocage 19 est soumis en permanence à un effort de rappel qui tend à le ramener ou à le maintenir dans sa position inférieure correspondant à la position de blocage. Dans l'exemple illustré aux figures, ladite force de rappel à laquelle est soumise l'organe de blocage 19 est avantageusement formé, au moins en partie et de préférence totalement, par le poids dudit organe de blocage 19, qui rappelle ce dernier en position de blocage (position inférieure). Avantageusement, ladite position désactivée du support 18 est elle aussi une position de rappel. Ainsi, dans ce mode de réalisation préférentiel illustré aux figures, le support 18 est soumis, de préférence en permanence, à un effort de rappel qui tend à le ramener ou à le maintenir dans sa position désactivée. L'effort de rappel en question, qui s'exerce en permanence sur le support 18, est conçu pour être surmonté par l'effort de poids F exercé verticalement par la roue R sur le support 18 lorsque ladite roue R repose sur ce dernier.

Avantageusement, comme illustré aux figures, l'organe de blocage 19 exerce un effort de rappel sur le support 18 pour rappeler ce dernier en position désactivée. En d'autres termes, dans ce mode de réalisation préférentiel illustré aux figures, l'organe de blocage 19 est rappelé, de préférence par son propre poids, en position de blocage, et ledit organe de blocage 19 est relié au support 18 pour exercer sur ce dernier, sous l'effet du poids de l'organe de blocage 19, un effort de rappel qui tend à maintenir ou ramener le support 18 dans sa position désactivée.

Par exemple, l'organe de blocage 19 est formé par une plaque coulissante munie d'une fenêtre 19A à travers laquelle passe une portion du verrou 11.

Ledit verrou 11 est avantageusement pourvu d'une surface de butée 11A qui, lorsque la plaque coulissante formant l'organe de blocage 19 se trouve en position inférieure (position de blocage), est conçue pour venir en appui de blocage contre un bord 190 de la fenêtre 19A, empêchant ainsi le déplacement du verrou 11 jusque dans sa position de déverrouillage. Avantageusement, l'élément d'actionnement 18A porté par le support 18 est formé par une extrémité libre dudit troisième levier, sur laquelle repose la plaque coulissante formant l'organe de blocage 19, de sorte que lorsque le support 18 est soumis à l'effort de poids F exercé verticalement par la roue R, le support 18 bascule et soulève, par effet de levier, l'organe de blocage 19 formé en l'espèce par la plaque coulissante, qui est repoussé par l'élément d'actionnement 18A en position de déblocage.

En position de déblocage, la fenêtre 19A est décalée vers le haut, de sorte que la surface de butée 11A n'est plus en face du bord 190 de la fenêtre 19A mais se retrouve en face d'un espace libre (figure 9) qui autorise le basculement du premier levier formant avantageusement le verrou 11 jusque dans la position de déverrouillage.

Avantageusement, le dispositif de parcage 1 comprend un mécanisme de transformation de mouvement 20 pour transformer la descente du chariot 9 jusqu'à sa position basse en déplacement de ladite conformation d'appui 16 de sa position déployée vers sa position rétractée. En d'autres termes, ledit mécanisme de transformation de mouvement 20 relie le chariot 9 à la conformation d'appui 16 pour transformer le déplacement descendant du chariot 9, à l'approche de la position basse, en déplacement de la conformation d'appui 16 (par exemple sous la forme d'un pivotement) en direction de la position rétractée.

De préférence, le mécanisme de transformation de mouvement 20 est également conçu pour autoriser le déplacement de la conformation d'appui 16 de sa position rétractée vers sa position déployée lors de la montée du chariot 9 de sa position basse vers sa position haute. Par exemple, le mécanisme de transformation de mouvement 20 comprend au moins un deuxième chemin de guidage 21 porté par le bâti 2, et qui s'étend par exemple sur une portion de la hauteur de ce dernier, dans un plan vertical.

Le deuxième chemin de guidage 21 est par exemple formé par au moins une plaque allongée 21A, et par exemple par deux plaques allongées 21A, 21B superposées, fixées sur la face intérieure de la paroi latérale 703, selon une orientation oblique par rapport à la direction verticale X-X', comme illustré aux figures.

Le mécanisme de transformation de mouvement 20 comprend également au moins un deuxième élément de guidage 22 qui est embarqué par ladite conformation d'appui 16 et qui engage ledit deuxième chemin de guidage 21 pour se déplacer le long de ce dernier sous l'effet du déplacement de chariot 9. Le deuxième chemin de guidage 21 présente, au moins localement, une forme de rampe pour impartir audit deuxième élément de guidage 22 une trajectoire courbe et/ou inclinée verticalement. En d'autres termes, le deuxième chemin de guidage 21 contraint le deuxième élément de guidage 22 à se déplacer selon une trajectoire qui n'est pas, au moins localement, parallèle à la direction verticale X-X', lorsque le chariot 9 se déplace du haut vers le bas en direction de sa position basse. Le deuxième élément de guidage 22 est de ce fait soumis à une trajectoire courbe et/ou inclinée par rapport à la direction verticale X-X', de sorte qu'il entraîne le déplacement, et par exemple le pivotement, de la conformation d'appui 16.

Plus précisément, la rampe formée par le deuxième chemin de guidage 21 est avantageusement conçue pour entraîner le deuxième élément de guidage 22 en direction du fond 701 lorsque le chariot 9 s'approche en descendant de sa position basse, pour forcer ainsi la conformation d'appui 16 à rejoindre sa position rétractée, à l'encontre de la force de rappel élastique exercée par le troisième organe de rappel élastique 160, la conformation d'appui 16 regagnant ainsi sa position rétractée lorsque le verrou 9 atteint sa position basse. Inversement, la forme de rampe que présente le deuxième chemin de guidage 21 permet d'autoriser le deuxième élément guidage 22 à s'éloigner, de préférence progressivement, du fond 701, sous l'effet de la force de rappel exercé par le troisième organe de rappel élastique 160, lors de l'ascension du chariot 9 de sa position basse vers sa position haute, ce qui permet à la conformation d'appui 16 de gagner, de préférence progressivement, sa position déployée dans laquelle elle presse, selon la deuxième direction de poussée P2, la roue R embarquée par le chariot 9. Par exemple, conformément au mode de réalisation illustré aux figures, le deuxième élément de guidage 22 comprend un bras 22A qui est fixé au deuxième levier formant avantageusement la conformation d'appui 16.

Plus précisément, le bras 22A est attaché à la conformation d'appui 16 de façon à être immobilisé par rapport à cette dernière, et s'étend avantageusement de façon sensiblement perpendiculaire au deuxième levier en forme de gouttière qui forme préférentiellement la conformation d'appui 16. Le bras 22A s'étend ainsi entre une première extrémité solidaire de la conformation d'appui 16, et une deuxième extrémité libre.

Avantageusement, le deuxième élément de guidage 22 comprend également un deuxième galet 22B qui est de préférence porté par le bras 22A au niveau de ladite deuxième extrémité libre. Le deuxième galet 22B est monté avantageusement à rotation, selon un axe horizontal, par rapport au bras 22A. Le deuxième galet 22B est destiné à venir rouler sur une surface d'appui qui correspond au chant de la ou desdites plaques 21A, 21B formant préférentiellement le deuxième chemin de guidage 21. Le deuxième galet 22B est en permanence maintenu sur et contre le deuxième chemin de guidage 21, par la force de rappel élastique exercée par le troisième organe de rappel élastique 160.

Grâce à cette conception spécifique, le déplacement de la conformation d'appui 16 entre ses positions rétractée et déployée est piloté par le déplacement du chariot 9 entre ses positions haute et basse. Cela signifie que lors du déplacement du chariot 9 vers le haut à partir de sa position basse, la conformation d'appui 16 est libérée pour venir, en position déployée, presser élastiquement la roue R embarquée par le chariot 9, tandis qu'au contraire lors du déplacement vers le bas du chariot 9 vers sa position basse, la conformation d'appui 16 est forcée à revenir dans sa position rétractée, permettant ainsi le désengagement de la roue R hors du chariot 9 une fois ce dernier verrouillé en position basse.

Le fonctionnement du dispositif de parcage 1 illustré aux figures est le suivant.

Tout d'abord, le chariot 9 se trouve en position basse, avec le support 18 qui s'étend légèrement au-dessus du sol, de préférence à une distance prédéterminée de ce dernier qui est par exemple impartie par le socle 8 reposant sur le sol.

A ce stade, le support 18 se trouve dans sa position activée, dans laquelle il est rappelé par le poids de l'organe de blocage 19 qui s'exerce sur l'élément d'actionnement 18A.

L'organe de blocage 19 est lui-même rappelé vers le bas par son propre poids dans sa position de blocage (figures 1 à 5), dans laquelle le bord 190 de la fenêtre 19A vient former un obstacle pour la surface de butée 11A du verrou 11, empêchant ce dernier, qui se trouve en position de verrouillage, de rejoindre sa position de déverrouillage.

Un cycliste positionne alors la roue avant R de son vélo sur le support 18, pour que la portion 17B de l'organe d'accrochage 17 vienne s'insérer entre les rayons de la roue R, de sorte que la jante R0 et le pneu R1 de la roue R sont alors localement interposés entre ladite portion 17B de l'organe d'accrochage 17 et la conformation d'appui 16, laquelle se trouve à cet instant à distance du pneu R1. La roue arrière du vélo repose quant à elle toujours directement sur le sol, seule la roue avant R étant chargée sur le chariot 9.

À cet instant, sous l'effet de l'effort de poids F exercé verticalement par ladite roue avant R sur le support 18, ce dernier bascule vers le sol, c'est-à-dire qu'il pivote selon le deuxième axe de pivotement W-W'. En pivotant ainsi vers le bas, l'élément d'actionnement 18A porté par le support 18 repousse vers le haut, par effet de levier, l'organe de blocage 19, qui coulisse alors d'une position inférieure (position de blocage) vers une position supérieure (position de déblocage).

L'organe de blocage 19 se trouve alors maintenu, par la portion du troisième levier formant l'élément d'actionnement 18A, dans sa position de déblocage, dans laquelle la fenêtre 19A se trouve en regard du verrou 11. Ce dernier est dès lors en capacité de se déplacer librement à travers la fenêtre 19A, sans que la surface de butée 11A ne soit bloquée par le bord 190 de la fenêtre 19A (figure 8).

L'utilisateur fait ensuite avancer la roue avant R en direction du bâti 2, pour venir presser la conformation d'appui 16 au moyen de la roue R, selon la première direction de poussée de P1, tout en laissant la roue R reposer sur le support 18.

La poussée ainsi exercée par la roue R sur la conformation d'appui 16, selon la première direction de poussée de P1, va entraîner le basculement de la conformation d'appui 16 en direction du bâti 2.

En d'autres termes, la conformation d'appui 16 pivote selon le troisième axe de pivotement Z-Z' en direction de sa position rétractée, ce qui conduit le pion 16A à venir repousser le verrou 11 à l'encontre de la force de rappel exercée par le deuxième organe de rappel élastique 15, forçant ainsi le premier élément de guidage 14 à échapper (figures 9 et 10) à la portion de capture 13A par laquelle il était jusqu'à présent engagé pour maintenir le chariot 9 en position basse.

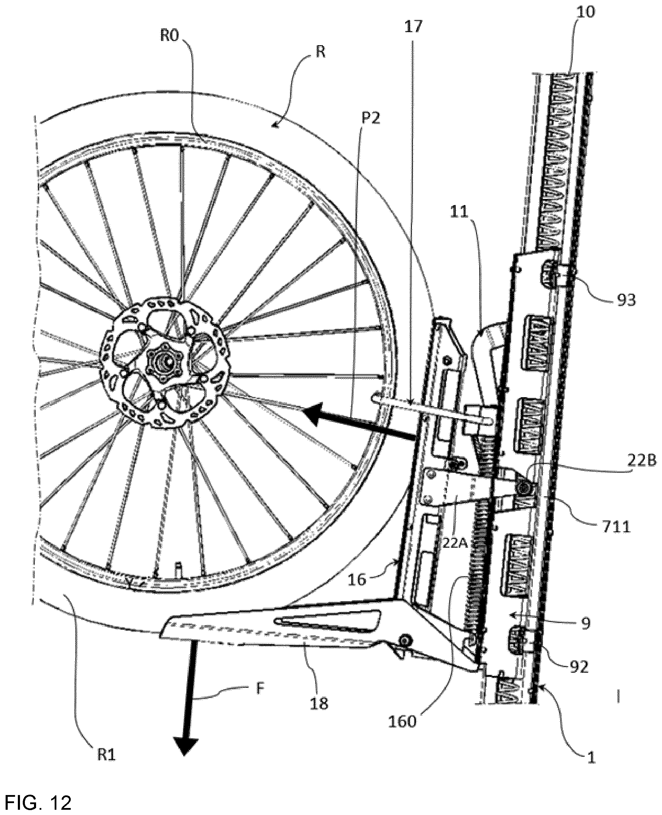

Une fois le premier élément de guidage 14 dégagé de la portion de capture 13A, le verrou 11 se trouve en position de déverrouillage et le chariot 9 est alors entraîné vers le haut, en direction de sa position haute, par le premier organe de rappel élastique 10. Sous l'effet de l'ascension du chariot 9 à partir de sa position basse, le long du bâti 2, le deuxième élément de guidage 22 se déplace le long du deuxième chemin de guidage 21 selon une trajectoire qui l'éloigne, progressivement, du bâti 2, autorisant ainsi la conformation d'appui 16 à être rappelée élastiquement, par le troisième organe de rappel élastique 160, en position déployée dans laquelle elle vient en appui sur et contre la roue R embarquée par le chariot 9 (figures 11 et 12). Ladite roue R est de ce fait soumise à un effort de poussée selon la deuxième direction de poussée P2, de sorte que ladite roue R est pressée localement entre l'organe accrochage 17 et la conformation d'appui 16. La roue R est ainsi capturée par le chariot 9 lors de l'ascension de ce dernier de sa position basse vers sa position haute.

Le chariot 9 qui embarque la roue avant R monte ainsi automatiquement sous l'effet du rappel élastique opéré par le premier organe de rappel élastique 10, jusqu'à atteindre sa position haute (figure 13), dans laquelle il s'immobilise. La roue arrière du vélo, qui n'était pas embarquée par le chariot 9, roule sur le sol au fur et à mesure de la montée du chariot 9 vers sa position haute, jusqu'à venir se positionner sensiblement sous la roue avant R lorsque le chariot 9 atteint sa position haute avec la roue avant R embarquée sur lui.

À ce stade, le vélo se trouve dans une position stable de stationnement vertical, avec la roue avant R capturée dans le chariot 9 en position haute, et la roue arrière qui se retrouve à une altitude inférieure à celle de la roue avant R, et qui vient par exemple en butée contre le bâti 2.

Pour quitter cette position de stationnement vertical, l'utilisateur exerce sur le chariot 9 un effort vertical du haut vers le bas, en saisissant par exemple le guidon du vélo pour impartir à la roue avant R un déplacement descendant, qui va être transmis au chariot 9 embarquant ladite roue R. Le chariot 9, avec la roue R qu'il embarque, va alors quitter sa position haute et venir rejoindre sa position basse.

À l'approche de cette dernière, le deuxième élément guidage 22 va être engagé par le deuxième chemin de guidage 21, forçant ainsi la conformation d'appui 16 à être ramenée en position rétractée, à l'encontre de la force de rappel élastique exercée par le troisième organe de rappel élastique 160.

En d'autres termes, à l'approche de la position basse du chariot 9, la conformation d'appui 16 est forcée à revenir en position rétractée, de sorte qu'elle cesse de presser la roue R contre l'organe d'accrochage 17. Concomitamment, à l'approche de la position basse du chariot 9, le premier élément de guidage 14 engage le premier chemin de guidage 13 jusqu'à venir être capturé par la portion de capture 13A de ce dernier. Le chariot 9 est alors immobilisé en position basse, avec la roue R qui n'est plus pressée par la conformation d'appui 16. Il suffit alors à l'utilisateur de désengager la roue R de l'organe accrochage 17 pour libérer le vélo du dispositif de parcage 1. Une fois la roue R hors du support 18, ce dernier est ramené en position désactivée, sous l'effet du poids de la plaque coulissante formant avantageusement l'organe de blocage 19.

Le dispositif de parcage 1 est alors sécurisé et prêt à être de nouveau utilisé, et le chariot 9 ne sera capable de quitter sa position basse pour rejoindre sa position haute que si d'une part une roue R est engagée sur le support 18 pour exercer sur ce dernier un effort de poids F, et si d'autre part, alors que la roue R repose sur le support 18, une action positive de poussée est exercée sur la conformation d'appui 16 pour déverrouiller le chariot 9 et autoriser sa montée spontanée, par rappel élastique, en position haute.

## Revendications

1. Dispositif de parcage (1) pour cycle comprenant :
- un bâti (2),
- un chariot (9) monté à coulissement relativement au bâti (2) entre une position basse et une position haute de rappel, ledit chariot (9) étant conçu pour embarquer de façon amovible une roue (R) d'un cycle à parquer afin que ladite roue (R) se déplace avec le chariot (9), ce qui permet d'amener ledit cycle dans une position relevée de parcage, correspondant à la position haute du chariot (9),
- un verrou (11) porté par le chariot (9) et monté mobile relativement à ce dernier entre une position de verrouillage, dans laquelle ledit verrou (11) engage une conformation d'arrêt (12) solidaire du bâti (2) pour empêcher ledit chariot (9) de rejoindre la position haute à partir de la position basse, et une position de déverrouillage, dans laquelle ledit verrou (11) est dégagé de ladite conformation d'arrêt (12) pour autoriser ledit chariot (9) à rejoindre la position haute à partir de ladite position basse,
- une conformation d'appui (16) conçue pour entraîner le verrou (11) de sa position de verrouillage à sa position de déverrouillage en réponse à l'exercice, sur ladite conformation d'appui (16), d'une poussée appliquée par l'intermédiaire de ladite roue (R) selon une première direction de poussée (P1) sécante à la direction verticale (X-X'),
ledit dispositif de parcage (1) comprenant un support (18) porté par le chariot (9) et sur lequel est destinée à reposer ladite roue (R) embarquée par le chariot (9), ledit support (18) étant monté mobile relativement au chariot (9) entre une position désactivée entraînant le blocage du verrou (11) pour l'empêcher de gagner sa position de déverrouillage à partir de sa position de verrouillage, et une position activée entraînant la libération du verrou (11) pour l'autoriser à gagner sa position de déverrouillage, ledit support (18) étant conçu pour gagner sa position activée à partir de sa position désactivée sous l'effet d'un effort de poids (F) exercé verticalement par ladite roue (R) sur ledit support (18) lorsque ladite roue (R) repose sur ce dernier,
dispositif de parcage (1) étant **caractérisé en ce que** ladite conformation d'appui (16) est montée mobile entre au moins une position rétractée, dans laquelle elle repousse le verrou (11) en position de déverrouillage et une position déployée, dans laquelle elle est rappelée élastiquement pour pousser sur la roue (R) selon une deuxième direction (P2) de poussée opposée à ladite première direction de poussée (P1), ladite conformation d'appui (16) étant montée à pivotement selon un troisième axe de pivotement (Z-Z').

2. Dispositif de parcage (1) pour cycle selon la revendication précédente **caractérisé en ce qu'**il comprend un premier organe de rappel élastique (10) qui relie lesdits bâti (2) et chariot (9) pour rappeler élastiquement ledit chariot (9) en position haute.

3. Dispositif de parcage (1) pour cycle selon l'une quelconque des revendications précédentes **caractérisé en ce que** ledit support (18) est monté à pivotement selon un deuxième axe (W-W') de pivotement horizontal par rapport audit chariot (9).

4. Dispositif de parcage (1) pour cycle selon l'une quelconque des revendications précédentes **caractérisé en ce qu'**il comprend un organe de blocage (19) porté par le chariot (9) et monté mobile relativement à ce dernier entre une position de blocage dans laquelle l'organe de blocage (19) fait obstacle au déplacement du verrou (11) et une position de déblocage dans laquelle l'organe de blocage (19) libère le déplacement du verrou (11), ledit organe de blocage (19) étant relié audit support (18) pour que le déplacement dudit support (18) de la position désactivée à la position activée entraîne le déplacement dudit organe de blocage (19) de la position de blocage à la position de déblocage.

5. Dispositif de parcage (1) pour cycle selon la revendication précédente **caractérisé en ce que** ledit organe de blocage (19) est monté à coulissement relativement au chariot (9).

6. Dispositif de parcage (1) pour cycle selon l'une quelconque des revendications précédentes **caractérisé en ce que** ladite position désactivée est une position de rappel.

7. Dispositif de parcage (1) pour cycle selon les revendications 4 et 6 **caractérisé en ce que** ledit organe de blocage (19) exerce un effort de rappel sur ledit support (18) pour rappeler ce dernier en position désactivée.

8. Dispositif de parcage (1) pour cycle selon l'une quelconque des revendications précédentes **caractérisé en ce que** ladite position de verrouillage est une position de rappel.

9. Dispositif de parcage (1) pour cycle selon l'une quelconque des revendications précédentes **caractérisé en ce que** ledit verrou (11) est monté à pivotement selon un premier axe de pivotement (Y-Y') relativement audit chariot (9).

10. Dispositif de parcage (1) pour cycle selon l'une quelconque des revendications précédentes **caractérisé en ce qu'**il comprend au moins un premier chemin de guidage (13) porté par ledit bâti (2), ledit verrou (11) comprenant un premier élément de guidage (14) qui engage ledit premier chemin de guidage (13) pour se déplacer le long de ce dernier sous l'effet du déplacement du chariot (9), ledit premier chemin de guidage (13) comprenant une portion de capture (13A) conçue pour capturer ledit premier élément de guidage (14) lorsque le chariot (9) atteint sa position basse, ladite portion de capture (13A) formant ladite conformation d'arrêt (12).

11. Dispositif de parcage (1) pour cycle selon l'une quelconque des revendications précédentes **caractérisé en ce que** ledit chariot (9) est pourvu d'un organe d'accrochage (17) de ladite roue (R), qui est conçu pour venir s'insérer entre des rayons de ladite roue (R) lorsque cette dernière est embarquée par le chariot (9), pour que ladite roue (R) soit interposée entre ledit organe d'accrochage (17) et ladite conformation d'appui (16).

12. Dispositif de parcage (1) pour cycle selon la revendication 3 **caractérisé en ce que** lesdits deuxième et troisième axes de pivotement (W-W', Z-Z') sont confondus.

13. Dispositif de parcage (1) pour cycle selon l'une quelconque des revendications précédentes **caractérisé en ce qu'**il comprend un mécanisme de transformation de mouvement (20) pour transformer la descente dudit chariot (9) jusqu'à sa position basse en déplacement de ladite conformation d'appui (16) de sa position déployée vers sa position rétractée.

14. Dispositif de parcage (1) pour cycle selon la revendication précédente, **caractérisé en ce que** ledit mécanisme de transformation de mouvement (20) comprend au moins :
- un deuxième chemin de guidage (21) porté par ledit bâti (2),
- un deuxième élément de guidage (22) qui est embarqué par ladite conformation d'appui (16) et qui engage ledit deuxième chemin de guidage (21) pour se déplacer le long de ce dernier sous l'effet du déplacement du chariot (9),
ledit deuxième chemin de guidage (21) présentant une forme de rampe pour impartir audit deuxième élément de guidage (22) une trajectoire courbe et/ou inclinée verticalement.

15. Dispositif de parcage (1) pour cycle selon la revendication précédente **caractérisé en ce que** ladite conformation d'appui (16) présente une portion concave destinée à venir au contact de ladite roue (R).

## Patentansprüche

1. Parkvorrichtung (1) für ein Fahrrad, umfassend:
- ein Gestell (2),
- einen Schlitten (9), der relativ zum Gestell (2) zwischen einer unteren und einer oberen Rückstellposition gleitbeweglich montiert ist, wobei der Schlitten (9) dazu ausgelegt ist, ein Rad (R) eines zu parkenden Fahrrads auf abnehmbare Weise mitzunehmen, damit das Rad (R) sich mit dem Schlitten (9) bewegt, wodurch das Fahrrad in eine angehobene Parkposition gebracht werden kann, die der oberen Position des Schlittens (9) entspricht,
- einen Riegel (11), der vom Schlitten (9) getragen wird und relativ zu diesem zwischen einer Verriegelungsposition, in welcher der Riegel (11) in eine mit dem Gestell (2) fest verbundene Arretierungsausbildung (12) eingreift, um zu verhindern, dass der Schlitten (9) von der unteren Position aus die obere Position erreicht, und einer Entriegelungsposition beweglich montiert ist, in welcher der Riegel (11) von der Arretierungsausbildung (12) gelöst ist, um zuzulassen, dass der Schlitten (9) von der unteren Position aus die obere Position erreicht,
- eine Stützausbildung (16), die dazu ausgelegt ist, den Riegel (11) in Reaktion auf die Ausübung einer durch das Rad (R) auf die Stützausbildung (16) in einer die vertikale Richtung (X-X') schneidenden ersten Schubrichtung (P1) ausgeübten Schubkraft aus seiner Verriegelungsposition in seine Entriegelungsposition zu bringen,
wobei die Parkvorrichtung (1) einen Träger (18) umfasst, der vom Schlitten (9) getragen wird und auf dem das vom Schlitten (9) mitgenommene Rad (R) aufliegt, wobei der Träger (18) relativ zum Schlitten (9) zwischen einer deaktivierten Position, in welcher der Riegel (11) blockiert ist, um zu verhindern, dass er aus seiner Verriegelungsposition in seine Entriegelungsposition gelangt, und einer aktivierten Position beweglich montiert ist, die zur Freigabe des Riegels (11) führt, um das Erreichen seiner Entriegelungsposition zuzulassen, wobei der Träger (18) dazu ausgelegt ist, unter der Wirkung einer Gewichtskraft (F), die vertikal durch das Rad (R) auf den Träger (18) ausgeübt wird, wenn das Rad (R) auf diesem aufliegt, aus seiner deaktivierten Position in seine aktivierte Position zu gelangen,
wobei die Parkvorrichtung (1) **dadurch gekennzeichnet ist, dass** die Stützausbildung (16) zwischen mindestens einer zurückgezogenen Position, in welcher sie den Riegel (11) in die Entriegelungsposition zurückschiebt, und einer ausgezogenen Position beweglich montiert ist, in welche sie elastisch zurückgestellt wird, um das Rad (R) in einer zweiten Schubrichtung (P2) zu drücken, die der ersten Schubrichtung (P1) entgegengesetzt ist, wobei die Stützausbildung (16) um eine dritte Schwenkachse (Z-Z') schwenkbar montiert ist.

2. Parkvorrichtung (1) für ein Fahrrad nach dem vorherigen Anspruch, **dadurch gekennzeichnet, dass** sie ein erstes elastisches Rückstellorgan (10) umfasst, das das Gestell (2) und den Schlitten (9) verbindet, um den Schlitten (9) elastisch in die obere Position zurückzustellen.

3. Parkvorrichtung (1) für ein Fahrrad nach einem der vorherigen Ansprüche, **dadurch gekennzeichnet, dass** der Träger (18) um eine zweite horizontale Schwenkachse (W-W') relativ zum Schlitten (9) schwenkbar montiert ist.

4. Parkvorrichtung (1) für ein Fahrrad nach einem der vorherigen Ansprüche, **dadurch gekennzeichnet, dass** sie ein Blockierorgan (19) umfasst, das vom Schlitten (9) getragen wird und relativ zu diesem zwischen einer Blockierposition, in welcher das Blockierorgan (19) die Bewegung des Riegels (11) behindert, und einer Freigabeposition beweglich montiert ist, in welcher das Blockierorgan (19) die Bewegung des Riegels (11) freigibt, wobei das Blockierorgan (19) mit dem Träger (18) verbunden ist, damit die Bewegung des Trägers (18) aus der deaktivierten Position in die aktivierte Position die Bewegung des Blockierorgans (19) aus der Blockierposition in die Freigabeposition bewirkt.

5. Parkvorrichtung (1) für ein Fahrrad nach dem vorherigen Anspruch, **dadurch gekennzeichnet, dass** das Blockierorgan (19) relativ zum Schlitten (9) gleitbeweglich montiert ist.

6. Parkvorrichtung (1) für ein Fahrrad nach einem der vorherigen Ansprüche, **dadurch gekennzeichnet, dass** die deaktivierte Position eine Rückstellposition ist.

7. Parkvorrichtung (1) für ein Fahrrad nach den Ansprüchen 4 und 6, **dadurch gekennzeichnet, dass** das Blockierorgan (19) auf den Träger (18) eine Rückstellkraft ausübt, um diesen in die deaktivierte Position zurückzustellen.

8. Parkvorrichtung (1) für ein Fahrrad nach einem der vorherigen Ansprüche, **dadurch gekennzeichnet, dass** die Verriegelungsposition eine Rückstellposition ist.

9. Parkvorrichtung (1) für ein Fahrrad nach einem der vorherigen Ansprüche, **dadurch gekennzeichnet, dass** der Riegel (11) relativ zum Schlitten (9) um eine erste Schwenkachse (Y-Y') schwenkbar montiert ist.

10. Parkvorrichtung (1) für ein Fahrrad nach einem der vorherigen Ansprüche, **dadurch gekennzeichnet, dass** sie mindestens einen ersten Führungsweg (13) umfasst, der vom Gestell (2) getragen wird, wobei der Riegel (11) ein erstes Führungselement (14) aufweist, das in den ersten Führungsweg (13) eingreift, um sich an diesem entlang unter der Wirkung der Bewegung des Schlittens (9) zu bewegen, wobei der erste Führungsweg (13) einen Aufnahmeabschnitt (13A) aufweist, der dazu ausgelegt ist, das erste Führungselement (14) aufzunehmen, wenn der Schlitten (9) seine untere Position erreicht, wobei der Aufnahmeabschnitt (13A) die Arretierungsausbildung (12) bildet.

11. Parkvorrichtung (1) für ein Fahrrad nach einem der vorherigen Ansprüche, **dadurch gekennzeichnet, dass** der Schlitten (9) mit einem Einhängeorgan (17) für das Rad (R) versehen ist, das dazu ausgelegt ist, sich zwischen Speichen des Rads (R) einzufügen, wenn dieses vom Schlitten (9) mitgenommen wird, damit das Rad (R) zwischen dem Einhängeorgan (17) und der Stützausbildung (16) angeordnet ist.

12. Parkvorrichtung (1) für ein Fahrrad nach Anspruch 3, **dadurch gekennzeichnet, dass** die zweite und die dritte Schwenkachse (W-W, Z-Z') zusammenfallen.

13. Parkvorrichtung (1) für ein Fahrrad nach einem der vorherigen Ansprüche, **dadurch gekennzeichnet, dass** sie einen Bewegungsumwandlungsmechanismus (20) umfasst, um die Abwärtsbewegung des Schlittens (9) bis zu seiner unteren Position in eine Bewegung der Stützausbildung (16) von ihrer ausgezogenen Position in ihre eingezogene Position umzuwandeln.

14. Parkvorrichtung (1) für ein Fahrrad nach dem vorherigen Anspruch, **dadurch gekennzeichnet, dass** der Bewegungsumwandlungsmechanismus (20) mindestens umfasst:
- einen zweiten Führungsweg (21), der vom Gestell (2) getragen wird,
- ein zweites Führungselement (22), das durch die Stützausbildung (16) mitgenommen wird und in den zweiten Führungsweg (21) eingreift, um sich an diesem entlang unter der Wirkung der Bewegung des Schlittens (9) zu bewegen,
wobei der zweite Führungsweg (21) eine Rampenform aufweist, um dem zweiten Führungselement (22) eine gekrümmte und/oder vertikal geneigte Bahn zu verleihen.

15. Parkvorrichtung (1) für ein Fahrrad nach dem vorherigen Anspruch, **dadurch gekennzeichnet, dass** die Stützausbildung (16) einen konkaven Abschnitt aufweist, der dazu bestimmt ist, mit dem Rad (R) in Kontakt zu kommen.

## Claims

1. A parking device (1) for a cycle comprising:
- a frame (2),
- a carriage (9) mounted such as to slide relative to the frame (2) between a low position and a high return position, said carriage (9) being designed to removably embed a wheel (R) of a cycle to be parked so that said wheel (R) moves with the carriage (9), which makes it possible to bring said cycle into a raised parking position, corresponding to the high position of the carriage (9),
- a lock (11) carried by the carriage (9) and mounted movably relative to the latter between a locking position, in which said lock (11) engages a stop conformation (12) secured to the frame (2) to prevent said carriage (9) from reaching the high position from the low position, and an unlocking position, in which said lock (11) is disengaged from said stop conformation (12) to allow said carriage (9) to reach the high position from said low position,
- a bearing conformation (16) designed to drive the lock (11) from its locking position to its unlocking position in response to the exertion, on said bearing conformation (16), of a thrust applied through said wheel (R) in a first thrust direction (P1) secant to the vertical direction (X-X'),
said parking device (1) comprising a support (18) carried by the carriage (9) and on which said wheel (R) embedded by the carriage (9) is intended to rest, said support (18) being mounted movably relative to the carriage (9) between a deactivated position causing the blocking of the lock (11) to prevent it from reaching its unlocking position from its locking position, and an activated position causing the release of the lock (11) to allow it to reach its unlocking position, said support (18) being designed to reach its activated position from its deactivated position under the effect of a weight force (F) exerted vertically by said wheel (R) on said support (18) when said wheel (R) rests on the latter,
said parking device (1) being **characterized in that** said bearing conformation (16) is mounted movably between at least one retracted position, in which it pushes back the lock (11) into the unlocked position and a deployed position, in which it is elastically returned to push on the wheel (R) in a second thrust direction (P2) opposite to said first thrust direction (P1), said bearing conformation (16) being mounted such as to pivot about a third pivot axis (Z-Z').

2. The parking device (1) for a cycle according to the preceding claim, **characterized in that** it comprises a first elastic return member (10) which connects said frame (2) and carriage (9) to elastically return said carriage (9) to the high position.

3. The parking device (1) for a cycle according to any one of the preceding claims, **characterized in that** said support (18) is mounted such as to pivot along a second horizontal pivot axis (W-W') relative to said carriage (9).

4. The parking device (1) for a cycle according to any one of the preceding claims, **characterized in that** it comprises a blocking member (19) carried by the carriage (9) and mounted movably relative to the latter between a blocking position in which the blocking member (19) obstructs the displacement of the lock (11) and an unblocking position in which the blocking member (19) releases the displacement of the lock (11), said blocking member (19) being connected to said support (18) so that the displacement of said support (18) from the deactivated position to the activated position causes the displacement of said blocking member (19) from the blocking position to the unblocking position.

5. The parking device (1) for a cycle according to the preceding claim, **characterized in that** said blocking member (19) is mounted such as to slide relative to the carriage (9).

6. The parking device (1) for a cycle according to any one of the preceding claims, **characterized in that** said deactivated position is a return position.

7. The parking device (1) for a cycle according to claims 4 and 6, **characterized in that** said blocking member (19) exerts a return force on said support (18) to return the latter to the deactivated position.

8. The parking device (1) for a cycle according to any one of the preceding claims, **characterized in that** said locking position is a return position.

9. The parking device (1) for a cycle according to any one of the preceding claims, **characterized in that** said lock (11) is mounted such as to pivot about a first pivot axis (Y-Y') relative to said carriage (9).

10. The parking device (1) for a cycle according to any one of the preceding claims, **characterized in that** it comprises at least one first guide path (13) carried by said frame (2), said lock (11) comprising a first guide element (14) which engages said first guide path (13) to move along the latter under the effect of the displacement of the carriage (9), said first guide path (13) comprising a capture portion (13A) designed to capture said first guide element (14) when the carriage (9) reaches its low position, said capture portion (13A) forming said stop conformation (12).

11. The parking device (1) for a cycle according to any one of the preceding claims, **characterized in that** said carriage (9) is provided with a member (17) for attaching said wheel (R), which is designed to be inserted between spokes of said wheel (R) when the latter is embedded by the carriage (9), so that said wheel (R) is interposed between said attachment member (17) and said bearing conformation (16).

12. The parking device (1) for a cycle according to claim 3, **characterized in that** said second and third pivot axes (W-W', Z-Z') are the same.

13. The parking device (1) for a cycle according to any one of the preceding claims, **characterized in that** it comprises a movement transformation mechanism (20) for transforming the descent of said carriage (9) to its low position into displacement of said bearing conformation (16) from its deployed position to its retracted position.

14. The parking device (1) for a cycle according to the preceding claim, **characterized in that** said movement transformation mechanism (20) comprises at least:
- a second guide path (21) carried by said frame (2),
- a second guide element (22) which is embedded by said bearing conformation (16) and which engages said second guide path (21) to move along the latter under the effect of the displacement of the carriage (9),
said second guide path (21) having a ramp shape to impart to said second guide element (22) a curved and/or vertically inclined trajectory.

15. The parking device (1) for a cycle according to the preceding claim, **characterized in that** said bearing conformation (16) has a concave portion intended to come into contact with said wheel (R).
